Europäisches Patentamt

European Patent Office

Office européen des brevets

(11) Publication number: **0 340 782**
**A1**

## (12) EUROPEAN PATENT APPLICATION

(21) Application number: 89108106.9

(22) Date of filing: 05.05.89

(51) Int. Cl.⁴: **B60N 1/12 , B60R 21/06 , B60R 22/10**

(30) Priority: **06.05.88 FI 882120**

(43) Date of publication of application:
**08.11.89 Bulletin 89/45**

(84) Designated Contracting States:
**AT BE CH DE ES FR GB GR IT LI LU NL SE**

(71) Applicant: **Electrolux Autoliv AB**

**S-10545 Stockholm(SE)**

(72) Inventor: **Sundberg, Jukka**
**Stromsvagen 1-5 A**
**Helsingfors 93(FI)**
Inventor: **Martin, Bror**
**SF-01120 Vasterskog**
**SF-01120 Vasterskog(FI)**

(74) Representative: **Frankland, Nigel Howard et al**
**FORRESTER & BOEHMERT**
**Widenmayerstrasse 4/I**
**D-8000 München 22(DE)**

(54) **A safety arrangement.**

(57) A safety arrangement is to be used when carrying a baby or young child in a vehicle within a carry-cot or the body of a pram. The arrangement consists of a framework(1) to be detachably fastened to the seat of a vehicle using a conventional seat belt, a net which is connected to the framework to extend over the carry-cot or pram-body and at least one shock-absorbing element(4) associated with the framework and the net to resisiently retain the carry-cot or pram-body in position.

EP 0 340 782 A1

Xerox Copy Centre

# A safety arrangement

THE PRESENT INVENTION relates to a safety arrangement and more particularly relates to an arrangement suitable for use when transporting young children in a vehicle such as a motor car.

At the present point in time there is always a risk involved when carrying young children in a vehicle such as a motor car. Young children are small, and are thus difficult to retain with a conventional safety belt, and also young children tend to be lively, and are thus not easily restrained in a single position. In contrast, when a child is older, and can sit upright for a relatively lengthy period of time, it is possible to use a child seat, provided with appropriate safety belts, or to utilise a safety cushion, enabling the child to be restrained by safety belts fitted in the motor vehicle and intended for use by adults.

However, it is to be understood that presently existing safety seats and safety cushions are not really suitable for use to restrain babies and very young children. Such babies and young children should most preferably be able to travel in a prone position, for example in a carry-cot, or the carrying portion of a pram, or the like. Thus there is a requirement for a safety arrangement that can be utilised when fastening such a carry-cot or the like to the seat of a motor car.

It has been proposed previously to provide straps for use in securing a carry-cot or the like to the seat of a motor car and also safety nets of various kinds have been proposed previously. However, it has been found that these nets do not operate in a satisfactory manner in the case of sudden deceleration of a vehicle, impact with another vehicle, or other types of accident. The fact is that in such circumstances a child, restrained in a carry-cot or the like, may be thrown violently backwards, forwards or sideways, and this may cause injuries to the child.

The present invention seeks to provide a safety arrangement which reduces or obviates the disadvantages outlined above, and which is easy to carry, and which can be readily mounted in position on the seat of a vehicle such as a motor car.

According to this invention there is provided a safety arrangement for use when carrying a baby or young child in a vehicle, said arrangement comprising a framework adapted to be detachably fastened to a seat of the vehicle, and a net connected to the framework, there being at least one shock-absorbing element associated with the framework and a net.

Preferably the framework presents a lower portion adapted to rest on the squab of the seat, and an upper substantially horizontally extending portion, to which the net is connected, the said shock-absorbing element forming part of a loop adapted to surround a carry-cot or pram-portion to secure the carry-cot or pram-portion to the framework.

Preferably two shock-absorbing elements are provided, and each shock-absorbing element may be a belt formed of a material having resilient properties, such as a belt made of polyester fibre, as is conventionally used for in-vehicle safety belts.

Advantageously the or each said loop is formed by the said shock-absorbing element, and an element formed of safety belt, together with a connecting buckle.

Preferably the net is of substantially rectangular form, one side of the net being connected to the said frame, and the other being connected to a rigid element.

Preferably a second shock-absorbing element is provided, supported to be positioned within a carry-cot or pram-portion restrained by said arrangement adjacent one side thereof. Conveniently a third shock-absorbing element may be provided supported to be positioned between the carry-cot or pram-portion and the framework.

Preferably the second and/or third shock-absorbing elements each comprise padded plates or padded cushions.

Preferably the framework presents an upper substantially horizontal loop of elongate form, the net being connected to one side of the loop, a pair of substantially vertical side elements located under the loop but spaced-apart by a distance less than the space between the opposed ends of the loop, and means connecting the lower ends of the side elements.

Conveniently the means connecting the lower ends of the side elements of the framework comprise substantially "U-shaped" portions of the framework lying in a substantially horizontal plane, and a further horizontally extending connecting portion.

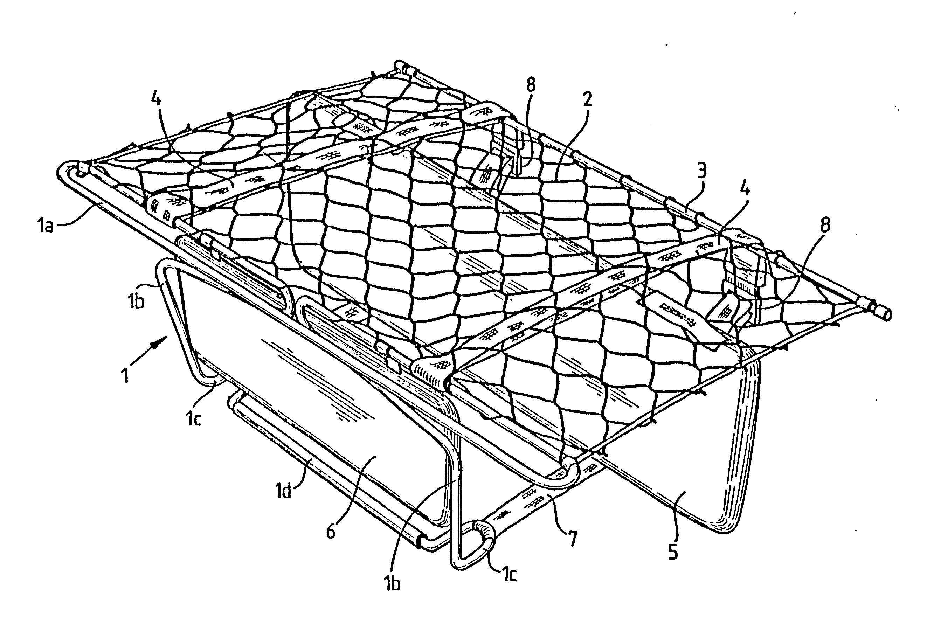

In order that the invention may be more readily understood, and so that further features thereof may be appreciated, the invention will now be described, by way of example, with reference to the accompanying drawing which is a perspective view of a safety arrangement in accordance with the present invention in the operative condition.

Referring to the drawing, a safety arrangement in accordance with the invention comprises a frame 1, a net 2, a side element 3 for the net, two shock-absorbing straps 4, a first shock-absorbing panel 5 and a second shock-absorbing panel 6. Further, the described embodiment comprises two strap portions 7, each associated with a connector 8 in the form of a buckle.

The frame 1 is preferably formed of steel wire or steel tube. The upper part of the frame forms an elongate oval loop 1A which lies substantially in a horizontal plane. The oval loop 1A has rounded ends and elongate parallel opposed straight sides. Adjacent the mid-point of the said other straight side each of the respective parts is bent downwardly through approximately 180° so that the wire or tube then extends outwardly away from each other, at a level below the upper loop 1A. At points spaced inwardly from the opposed ends of the oval loops 1A, each portion of the wire or tube is then bent to extend downwardly forming two spaced-apart substantially vertical sides 1B for the frame. It is to be appreciated that the spacing between the two sides 1B of the frame is significantly less than the spacing between the two rounded ends of the loop 1A.

One side of the loop is formed from a single piece of tube or wire. At the ends of this side the wire or tube is bent to form the rounded ends. From each of the ends a respective part of the wire or tube extends linearly, these two respective parts forming the other straight side.

At the lower end of each side portion of the frame 1B there is a forwardly directed "U-shaped" bent portion of frame, lying in a substantially horizontal plane. Each "U-shaped" portion 1C has a free end which is located towards the centre of the frame, and terminates with a spigot portion directed towards the centre of the frame. A tubular element 1D is releasably mounted on the opposed spigots. The element 1D may have a greater or lesser diameter than the wire or tubing of the rest of the frame.

The frame is preferably adapted and designed to be mounted on the rear seat of a motor vehicle, with the "U-shaped" portions 1C resting on the squab of the seat, the side portions 1B lying adjacent the back of the seat, and the uninterrupted side of the loop 1A lying in contact with the back of the seat. The described frame may be held firmly in position on the seat by use of a conventional "lap and diagonal" safety belt. The lap portion of such a safety belt may be located to pass over the forwardly directed "U-shaped" portions 1C, and may be tightened in position thus preventing the lower part of the frame from rising up from the squab of the seat and also preventing the lower part of the frame from moving forwards from its normal position in the region where the squab of the seat meets the back of the seat. The diagonal part of the safety belt may pass through the upper horizontal loop 1A, and in front of one side portion 1B of the frame.

It will be appreciated that when the frame is mounted on a seat and is retained in position by the conventional three-point safety belt as described, the safety belt will provide a certain shock-absorbing effect.

The net 2 is preferably formed of a somewhat flexible material. The net is of rectangular form. One side edge of the net is connected to the side of the upper loop 1A which is opposite the uninterrupted side. Part of the tube or wire forming this side of the loop of the frame may be threaded through the various openings formed in the net.

The element 3 is an elongate element, again formed of metal tube or wire, which is connected to the opposed side edge of the net. The other two free side edges of the net are preferably provided with an edging strip of rubber or similar resilient material which extends between the loop 1A and the element 3, again threaded through the various apertures formed by the net.

The two shock-absorbing straps 4 are substantially parallel and extend from the loop 1A to the element 3. The shock-absorbing straps 4 may be threaded through various openings present in the net.

It is to be noted that the shock-absorbing straps 4 are fastened to the loop 1A of the frame being substantially in alignment with the side edges 1B of the frame. The shock-absorbing straps 4 may comprise straps or belts formed, for example, of a resilient material such as polyester fibre, which is the same material as is conventionally used for safety belts.

Two strap portions 7 are associated with the frame, each connected to the forward-most end of a respective "U-shaped" portion 1C of the frame and each terminating in a buckle-type-connector which is connected to the free end of the respective shock-absorbing straps 4. It is to be appreciated that in assembling the frame the belt portions 7 may easily be mounted in position by slipping them on to the respective bends 1O before the tubular portion 1D is mounted in position.

The shock-absorbing panels 5 and 6 each comprise a padded plate or cushion of plate-like form. The shock-absorbing panel 5 is suspended from the shock-absorbing straps 4. The shock-absorbing element 6 is of similar design to the shock-absorbing element 5 and is suspended from the upper loop 1A of the frame or from the net 2.

In use of the described safety arrangement, the frame 1 will be restrained on a seat of a motor vehicle utilising a conventional safety belt arrangement, as described above, and a carry-cot or the body of a pram in which a baby is to be carried is mounted on the seat, on top of the belt portions 7. The net is then lowered into position, with the shock-absorbing panel 5 located within the carry-cot or pram-body, and the shock absorbing panel 6 between the frame 1 and the carry-cot or pram-body. The connectors 8 are then fastened. Thus two loops are formed, each comprising a strap portion 7 and a shock-absorbing strap 4. The loops surround the carry-cot or pram-body to hold it in position, but also provides a shock-absorbing effect. In the event that an accident arises, and the vehicle is subjected to severe deceleration, if the child is thrown forwardly within the carry-cot, the child will be thrown on to the shock-absorbing panel 5, also the shock will be absorbed at least partially by the shock-absorber 4, and further by the shock-absorbing effect provided by the conventional safety belt.

If the child is thrown rearwardly, the shock will be absorbed by the shock-absorbing panel 6 and also by the inherent resilient source springiness of the seat on which the frame 1 is mounted.

It is to be understood that the various described elements may be adjustable, in that the belt sections 7 may be of adjustable length, and the shock-absorbing elements 4 may also be of adjustable length.

It is to be appreciated that the safety arrangement described above can be rapidly mounted in a motor car and provides a high degree of protection for a baby or young child transported within a carry-cot or the body of a pram when utilised with the described arrangement.

Many modifications may be effected to the described embodiment without departing from the scope of the invention as defined by the following Claims.

## Claims

1. A safety arrangement for use when carrying a baby or young child in a vehicle, said arrangement comprising a framework(1) adapted to be detachably fastened to a seat of a vehicle, and a net(3) connected to the framework, there being at least one shock-absorbing element(4) associated with the framework and the net.

2. An arrangement according to Claim 1 wherein the framework presents a lower portion(1C) adapted to rest on the squab of the seat, and an upper substantially horizontal extending portion-(1A), to which the net(3) is connected, the said shock-absorbing element(4) forming part of a loop-(4,7,8), adapted to surround a carry-cot or pram-portion to secure the carry-cot or pram-portion to the framework.

3. A safety arrangement according to Claim 1 or Claim 2 wherein two of said shock-absorbing elements(4) are provided.

4. A safety arrangement according to any one of the preceding Claims wherein the or each shock-absorbing element is a belt formed of a material having resilient properties.

5. A safety arrangement according to any one of the preceding Claims wherein the or each said loop is formed by said shock-absorbing elements-(4), and an element formed of a safety belt(7), together with a connecting buckle(8).

6. A safety arrangement according to any one of the preceding Claims wherein the net(3) is of sub stantially rectangular form, one side of the net being connected to said framework(1) and the other side being connected to a rigid edge element(3).

7. A safety arrangement according to any one of the preceding Claims wherein a second shock-absorbing element(5) is provided, supported to be positioned within a carry-cot or pram-portion restrained by said arrangement adjacent one side thereof.

8. A safety arrangement according to Claim 7 wherein a third shock-absorbing element(6) is provided supported to be positioned between the carry-cot or pram-portion and the framework(1).

9. A safety arrangement according to Claim 7 or 8 wherein the second and/or third shock-absorbing elements(5,6) each comprise padded plates or padded cushions.

10. A safety arrangement according to any one of the preceding Claims wherein the framework(1) presents an upper substantially horizontal loop(1A) of elongate form, the net(3) being connected to one side of the loop, a pair of substantially vertical side elements(1B) located under the loop but spaced apart by a distance less than the space between the opposed ends of the loop(1A), and means-(1C,1D) connecting the lower ends of said side elements.

11. A safety arrangement according to Claim 10 wherein the means connecting the lower ends of the side elements of the framework comprise substantially "U-shaped" portions(1C) of the framework lying in a substantially horizontal plane and a further horizontally extending connecting portion-(1D).

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | AU-B- 532 112 (WATSON) <br> * page 5, line 15 - page 6, line 11 * | 1-6 | B 60 N 1/12 <br> B 60 R 21/06 <br> B 60 R 22/10 |
| A | | 10 | |
| A | DE-U-7 526 399 (MORELLET GUERINEAU) <br> * page 6, lines 20-30 * | 7-9 | |
| A | FR-A-2 378 650 (CHRYSLER U.K.) <br> * figures 3,4 * | 1,6 | |

TECHNICAL FIELDS SEARCHED (Int. Cl.4)

B 60 N
B 60 R

The present search report has been drawn up for all claims

| Place of search | Date of completion of the search | Examiner |
|---|---|---|
| BERLIN | 27-07-1989 | STANDRING M A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)